# EUROPEAN PATENT SPECIFICATION

(11) **EP 2 833 036 B1**
(45) Date of publication and mention of the grant of the patent: **03.05.2017**
(21) Application number: 13768568.1
(22) Date of filing: 27.03.2013
(51) Int. Cl.: F16K 15/20, B60C 29/00, B60C 5/20

(54) **VALVE FOR A COMPARTMENTALIZED TYRE AND COMPARTMENTALIZED TYRE**
VENTIL FÜR EINEN UNTERTEILTEN REIFEN UND UNTERTEILTER REIFEN
VALVE POUR PNEUMATIQUE COMPARTIMENTÉ ET PNEUMATIQUE COMPARTIMENTÉ

(30) Priority: 28.03.2012 ES 201200335; 28.03.2012 ES 201200336
(43) Date of publication of application: 04.02.2015
(73) Proprietor: Advantaria, SL, 28760 Tres Cantos, Madrid (ES)
(72) Inventor: REQUENA RODRÍGUEZ, Ignacio, 28760 Tres Cantos (Madrid) (ES)
(74) Representative: Vossius & Partner Patentanwälte Rechtsanwälte mbB
(86) International application number: PCT/ES2013/000083
(87) International publication number: WO 2013/144395

(56) References cited:
- CN-Y- 201 093 111
- CN-Y- 201 405 689
- DE-A1- 3 105 941
- ES-T3- 2 160 414
- FR-A1- 2 605 269
- GB-A- 1 503 489
- GB-A- 191 102 326
- US-A- 2 059 045
- US-A- 2 501 937

## Description

### Field of the invention

The invention is included within the sector of products, systems, devices and accessories related to tyres, wheels and inner tubes for all type of vehicles. In particular, it is integrated among the devices that allow the sealing or communication of air between the interior and the exterior of a tyre or inner tube.

### State of the art

Since the invention of the inflatable tyre in the 19^{th} century, different systems have been developed for the introduction and extraction of pressurized air in a wheel, facilitating the communication and sealing of air between the interior and the exterior thereof. Among these systems, we should highlight the universal use of different models of valves which allow the introduction or extraction of air at will by the use of an opening and closing mechanism. This type of valves have standard approved dimensions and have, in general, a flexible mechanism or a longitudinal spring which presses on a cover and which, by the use of a part external to the valve (normally located in the end of the air filling/emptying duct) produces a pressure on said flexible mechanism, leading to the opening of the valve duct.

This technology is widely developed, having reached a great degree of precision and standardization which allows the fast and effective introduction or extraction of air in any tyre on the market.

On the other hand, the typical tyres on the market have a single airtight air compartment, which means that the pressure inside the tyre or inner tube is homogeneous throughout its volume, so that the introduction or extraction of air through a single point is sufficient. This system has the problem that, should the breakage or puncture of the surface of the outer tread occur, an immediate loss usually occurs of the pressure inside the wheel. To avoid this type of situation, a compartmentalization system has been developed of the air in several volumes. For the introduction and extraction of air from the different volumes, maintaining it at a constant pressure, it is necessary to use a new type of valve which allows the introduction or extraction of air in several ducts simultaneously inside the wheel.

In this way, the device object of the present patent of invention application enables the introduction or extraction of air simultaneously in several volumes, and at a homogeneous pressure, in the interior of a tyre or inner tube using the current pressurized inflation devices typical in service stations.Known valves for simultaneous filling of multiple chambers include those described in US 2 501 937 A and CN 201 093 111 Y. However, a simplified valve design enabling separation of the chambers after filling, is needed.

### Description of the invention

The present invention relates to a valve which allows the introduction or extraction of air in several volumes simultaneously, at the same pressure, using for this a standard tyre inflation device, without the need to perform any modification thereto and it is compatible with the habitual ducts in adapters of these devices.

The present valve uses, as with most of the existing valves for tyres, an elastic device connected to a longitudinal part, which is in turn solidly joined to the valve cover. On coupling a tyre inflation or deflation system to the valve, the inner protuberance of the inflation device adapter enters in contact with the protector of the longitudinal part forcing its displacement. When the longitudinal part is displaced, the valve cover opens, allowing the inlet or outlet of air therethrough. When the pressure on the longitudinal part disappears, the elastic device pushes the cover to its original position, causing, again, the sealing of the valve.

The special characteristic of the valve object of the present invention consists of the inner part of the valve being divided into several ducts. Each one of these ducts communicates with each one of the airtight volumes of pressurized air wherein the interior of the tyre or inner tube has been divided.

There are several possibilities of embodiment of this invention. The preferred embodiment includes all these ducts in the interior of an elastic duct of standard diameter, similar to those typically used to communicate the valve with the interior of the wheel. Many other embodiments can be chosen, depending whether it is decided, or not, to modify the orifice existing in the metal rim to allow the incorporation of communication ducts of another type.

### Description of the drawings

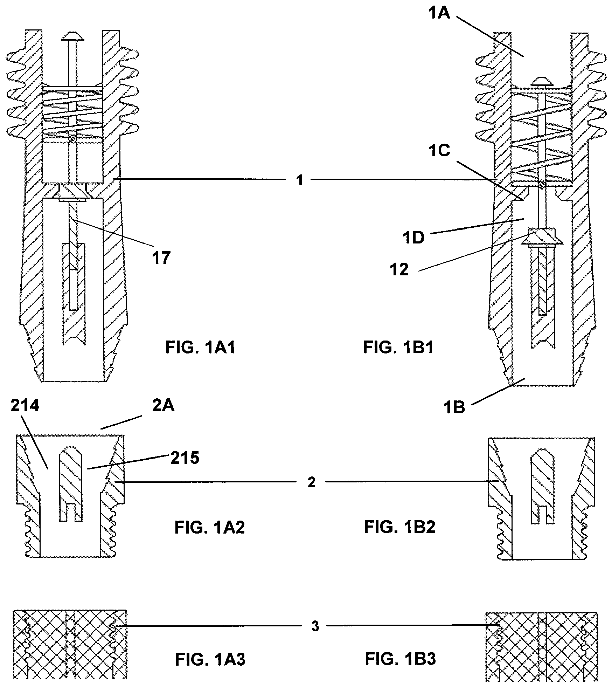

Figures 1A1-1B3 show a cross-section of the following components which are uncoupled: the valve, the adapter and the elastic duct separated in two airtight volumes.
Figures 1A1-1A3 show the situation wherein the valve is closed and figures 1B1-1B3 show the situation wherein the valve is completely open.

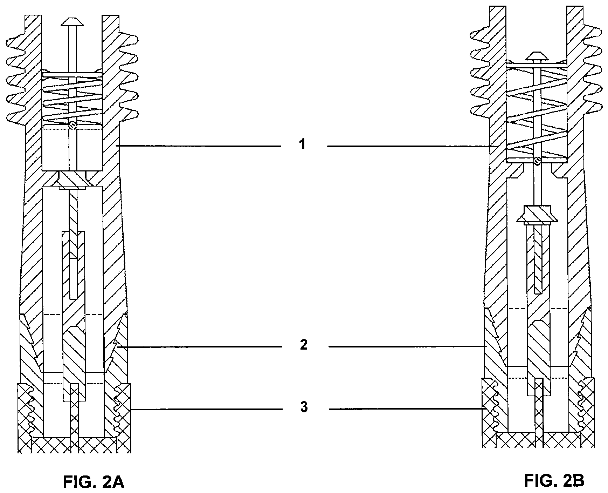

Figures 2A-2B show a cross-section of the following components which are coupled together: the valve, the adapter and the elastic duct separated in two airtight volumes. Figure 2A shows the situation wherein the valve is closed and figure 2B the situation wherein the valve is completely open.
Figure 3 shows a detailed cross-section of the valve in closed position.
Figure 4 shows a detailed cross-section of the valve in open position.
Figures 5A-5C show a cross-section and sections of the valve wherein the airtight separation is observed between the two inner volumes in closed position. Figures 5B and 5C show a plurality of notches and a plurality of protuberances situated in sides of the first cavity, of the second cavity, of the connection/disconnection separator and of an inner wall of the valve, and the connection area between the guiding means and separation of volumes with the inner walls of the valve. The sections shown in figures 5B-5C are indicated in figure 5A with the cut lines 5B-5B, 5C-5C.
Figures 6A-6B show a cross-section and a cross-sectional drawing of the valve wherein the communication between the inner volumes in open position are observed.
Figures 7A-7C show a cross-section, an upper plan drawing and another lower plan drawing of the adapter.
Figures 8A-8B show a cross-section, an upper plan drawing of the elastic duct separated in two airtight volumes, as well as a cross-sectional drawing.
Figure 9 shows a cross-section with the valve integrated in the vehicle rim and a coupled external pressurized air system. This figure shows the situation where the pressurized air enters the wheel.
Figure 10 shows a cross-section with the valve integrated in the vehicle rim and a coupled external pressurized air system. This figure shows the situation where the pressurized air exits the wheel.
Figure 11 shows a cross-section with the valve integrated in the vehicle rim and a coupled external pressurized air system. This figure shows the situation wherein a pressure change occurs between the two inner volumes until they are both at the same level.
Figures 12A-12B show a cross-section and an exterior side view of a complete tyre incorporating the valve of the invention.
Figure 13 shows a cross-section of the tread, the valve and the contact area of the rim showing the flows of air between volumes.
Figure 14 shows a detailed cross-section of the two ducts of the inlet valve and their communication with the ducts whereby the air is distributed in the tyre.
Figure 15 shows a cross-section of the inner tube and the valve showing the flow of air between volumes.

The different components that appear in the drawings are listed below:
1 - Valve body
1A - First end
1B - Second end
1C - Flow channel
1D - Communication channel
2 - Adapter of the valve to the elastic duct.
2A - First mouth
2B - Second mouth
214 - First duct
215 - Second duct
22a, 22b - Tongues
3 - Elastic duct separated longitudinally in two volumes.
314 - First subduct
315 - Second subduct
4 - Contact area of the longitudinal part.
5 - Space inside the valve mouth for the inlet or outlet of air.
6 - Stops for securing of the elastic spring.
7 - Thread for adapting the protective cap of the valve.
8 - Longitudinal spring.
9 - Screw for securing the spring to the longitudinal part.
10 - Longitudinal part.
11 - Wall of the external duct of the valve.
12 - Opening/closing cover of the flow channel
13 - Inner wall of the valve.
13A - Second notch in the inner wall of the valve.
13B - Second protuberance of the inner wall of the valve.
14 - First cavity or volume I of the inner duct.
15 - Second cavity or volume II of the inner duct.
16 - Guiding means for the displacement of the partition wall between Volume I and Volume II.
16A - Space between guiding means to guide the displacement of the connection/disconnection separator.
17 - Partition wall between Volume I and Volume II of the inner duct of the valve formed by a connection/disconnection separator of the communication channel.
17A - First notch in the connection/disconnection separator.
17B - First protuberance in the connection/disconnection separator.
172 - Opening/closing element formed by the opening/closing cover and the connection/disconnection separator
18 - Opening for the fixing of the adapter with the correct angle.
19 - Surface for the securing of the adapter.
21 - Positioning means, protuberance for the fixing of the adapter in the correct position
22 - Opening for the fixing of the elastic tube in the correct position.
23 - Toothed surface for fixing the adapter to the valve.
24 - Toothed surface for fixing the adapter to the elastic tube.
31 - Inner wall of the elastic tube which separates the two volumes.
32 - Outer wall of the elastic tube.
40 - Adapter for securing to the external pressurized air inlet or outlet system.
41 - Protuberance of the external pressurized air system for the valve opening.
42 - Mobile sheet for securing the external pressurized air system.
43 - Opening lever of the mobile sheet for securing the external system.
44 - Toothed surface for fixing of the elastic duct of the external system.
45 - Space for inlet or outlet of pressurized air from the external system.
50 - Elastic duct of the external pressurized air inlet or outlet system.
60 - Vehicle rim.
61 - First compartment or main inner volume for pressurized air.
62 - Second compartment or secondary inner volume for pressurized air.
63 - Elastic separation surface between the main and secondary volumes.
64 - Semi-rigid surfaces situated between the inner volumes.
65 - Communication duct between the valve and the inner volumes.
66 - Orifice in the separation surface between the main and secondary volumes.
67 - Outer surface of the tyre tread with gripping drawings.
68 - Lateral surface of the tyre tread.
69 - Axis of rotation.
70 - Surface of the rim for embedding of the tyre tread.
71 - Orifice in the rim for the inflation/deflation valve.
72 - Communication orifices between the inner volumes.
73 - Flow of air between the interior and the exterior of the valve.
74 - Flow of air between the upper duct of the valve and the main volume.
75 - Flow of air between the inner volumes and the tube that connects with the lower duct of the valve.
76 - Flow of air between the inner ducts.
77 - Intertwined metal structure of inner reinforcement of the tyre tread.
78 - Pressurized air entering through the upper duct of the valve.
79 - Pressurized air entering through the lower duct of the valve.
80 - Left flexible communication tube between the lower duct of the valve and the secondary inner volumes.
81 - Communication duct between the valve, the left tube and the right tube.
82 - Right flexible communication tube between the lower duct of the valve and the secondary inner volumes.
83 - Orifice of communication between the upper duct of the valve and the main volume.
84 - External surface of the tread in communication with the rim.
85 - Internal surface of the tread in communication with the main volume.
90 - Inner tube of air (or of another gas) for tyres with inner tube.
91 - Left duct of the valve
92 - Right duct of the valve
93 - Communication tube between the valve and the inner tube divided in two longitudinal ducts
94 - First compartment or upper airtight volume of the inner tube
95 - Second compartment or lower airtight volume of the inner tube
96 - Communication tube between the right duct of the valve and the lower compartment or airtight volume of the inner tube.
97 - Elastic wall of separation between the upper and lower compartments of the inner tube.
98 - Flow of air between the left duct of the valve and the upper compartment or volume of the inner tube.
99 - Flow of air between the right duct of the valve and the lower compartment or volume of the inner tube.

### Description of a preferred embodiment

One embodiment relates to a valve for a compartmentalized tyre. Compartmentalized tyre is understood in the invention to be that tyre, both with or without inner tube, comprising a plurality of airtight volumes inside. These compartments can be several volumes within the tyre without inner tube or several chambers within a tyre tread. In the closed position of the valve, the airtight volumes are isolated from one another.

The valve has a body (1) which has a first end (1A) configured for coupling to inflation/deflation means (50) of the compartmentalized tyre; a second end (1B), opposite the first end, configured for coupling to an inflation/deflation duct (3) of the compartmentalized tyre; a flow channel (1C) between the first end (1A) and the second end (1 B). The valve comprises:
a) at least two cavities located in the interior of the valve body (1):
   a1) a first cavity (14) comprising first connection means (141) to a first compartment (61, 94) of the tyre;
   a2) a second cavity (15) comprising second connection means (151) to a second compartment (62, 95) of the tyre;
b) a communication channel (1 D) between the first cavity (14) and the second cavity (15);
c) an opening/closing element (172) formed by:
   c1) an opening/closing cover (12) of the flow channel (1C);
   c2) a connection/disconnection separator (17) of the communication channel (1 D).

The cavities (14, 15) in the interior of the valve body (1) make it possible to connect several ducts (65, 93, 96) from several volumes (61, 62, 94, 95) in the tyre through a single orifice in the rim, that incorporated in conventional rims, without the need to make an orifice in the rim to connect each tyre duct (65, 93, 96) with each valve cavity (14,15). The invention is valid both for tyres without inner tube, for example those common in motor vehicles, and for tyres with inner tube, for example those common in bicycles. In other words, the valve of the invention allows combining compartmentalized tyres with conventional rings, used with tyres which have a single volume or compartment. In other words, it is not necessary to manufacture a specific rim for the case that the tyre that is going to be mounted is compartmentalized. The fact that the valve allows that a universal rim can be used for all types of tyres brings substantial benefits, not only financial due to the saving in the manufacturing of a considerably more complex rim -several orifices instead of one- but also in the assembly and later maintenance works of the wheel. The simple pressure control operation of the tyre with the valve of the invention does not require any special actuation, it also being compatible with the inflation/deflation apparatus of service stations. The invention has the advantages of having a compartmentalized tyre in a conventional rim, which can be inflated/deflated with the apparatus commonly found in service stations. Thus, the combination of the valve and tyre of the invention avoids all the unresolved complications in the state of the art.
Additionally, using multiple cavities that form subdivisions inside a single cylinder makes it possible to maximize the air flow in relation to the diameter of the tube that passes through this cylinder, since the only restriction to the general airflow is given by the size of the partition walls that may be of small size.
In accordance with other characteristics of the invention:
- the opening/closing element (172) has a movement between:
   an open position where the first cavity (14) and the second cavity (15) are communicated at the same pressure simultaneously;
   a closed position where the first cavity (14) and the second cavity (15) are isolated from one another.
- the opening/closing cover (12) and the connection/disconnection separator (17) are simultaneously displaced between the open position and the closed position in a longitudinal axial movement;
- The valve comprises guiding means (16) which define an opening/closing stroke of the connection/disconnection separator (17) between the open position and the closed position;
- The connection/disconnection separator (17) comprises a first notch (17A) and a first protuberance (17B) situated in a contact area between the connection/disconnection separator (17) and a wall of the first cavity (14) and of the second cavity (15).
- An inner wall of the valve (13) comprises a second notch (13A) and a second protuberance (13B) situated in a closure area between the inner wall of the valve (13) and the guiding means (16).
- The valve comprises an adapter (2) comprising:
   a) a first mouth (2A) for coupling to the second end (1 B) forming a first mouth (2A)-second end (1 B) joint;
   b) a second mouth (2B), opposite the first mouth, for coupling to an inflation/deflation duct (3) of the tyre;
   c) a first duct (214) for coupling to the first cavity (14);
   d) a second duct (215) for coupling to the second cavity (15);
   e) positioning means (21) which determine a coupling position between the body (1) and the adapter (2) where the first duct (214)-first cavity (14) coupling and the second duct (215-second cavity (15) coupling allow a flow of gas without losses in the first mouth (2A)-second end (1 B) joint;
- The adapter (2) comprises a plurality of tongues (22a, 22b) situated in sides of internal walls of the adapter (2), said tongues (22a, 22b) defining connection means with an inner wall (31) of the inflation/deflation duct (3) in accordance with a predetermined connection position;
- The valve comprises an elastic mechanism (8, 9) configured to allow an opening of the valve applying pressure on a contact head (4);
- A second aspect of the invention relates to a compartmentalized tyre comprising a valve as defined above.

In accordance with other characteristics of the invention:
- The compartmentalized tyre comprises a plurality of gas inlet and outlet ducts (80, 83, 93, 96):
   which connect the first compartment (61, 94) and the second compartment (62, 95) with the outside through the valve;
   disposed parallel to one another in an area exterior to a rim (60).
- The compartmentalized tyre comprises an inflation/deflation duct (3) comprising the gas inlet and outlet ducts (80, 83, 93, 96) in an area exterior to the rim (60).
- The compartmentalized tyre is selected from a tyre without an inner tube and a tyre with an inner tube.

A preferred embodiment of the invention is described below. This uses a valve which is compatible both with the current rim designs and the existing systems for the introduction or extraction of pressurized air in the wheels. As shown in figures 1A1-2B3, the body has been separated from the actual valve (1) of the adapter (2) which connects it with the elastic air inlet and outlet duct of the wheel (3).

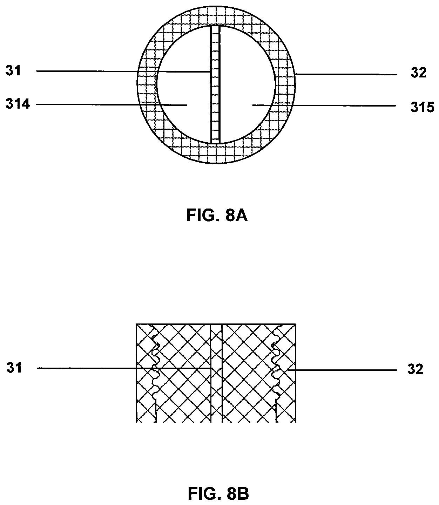

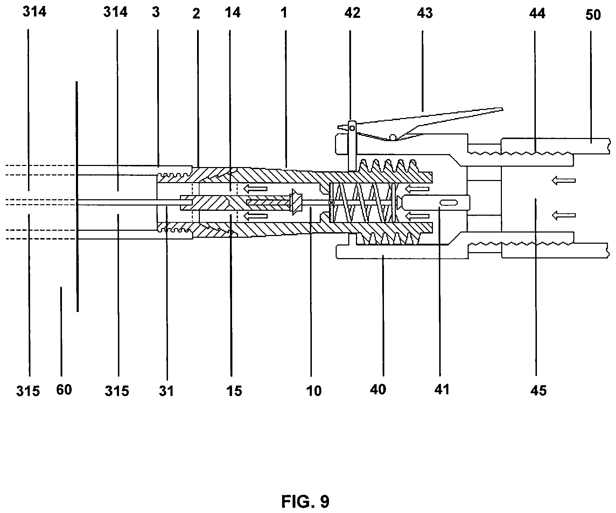

In this preferred embodiment, a wheel has been chosen which has two independent volumes of air. The air enters and exits the wheel through an elastic duct divided longitudinally in two independent volumes, as shown in figures 8A-8B. In this way, the valve described in this section is divided, in its inner part, in two separate compartments which are communicated with each one of the two duct volumes. In figures 9, 10 and 11 the operating diagram of the complete system in different inflation or deflation situations of the tyre can be observed.

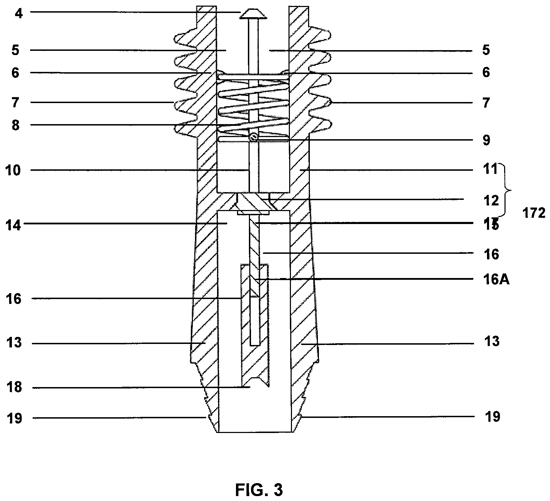

Figure 3 shows the components of this valve in detail. Therein, a longitudinal part (10) is fastened to the end of an elastic mechanism (8) by a set screw (9). This longitudinal part is solidly joined to a cover (12) and a panel (17) which is displaced in contact with the inner surface of the guide (13), dividing it into two symmetrical volumes (14 and 15). The panel is displaced through a cavity existing in the central wall of the lower part of the valve (16) and two small side grooves. Likewise, the elastic mechanism (8) is fastened to the inlet duct of the valve (11), by the other end, by two fasteners (6). On the other hand, the valve has a thread (7) for coupling to a protective cap. This thread is similar to those currently used by this type of valves.

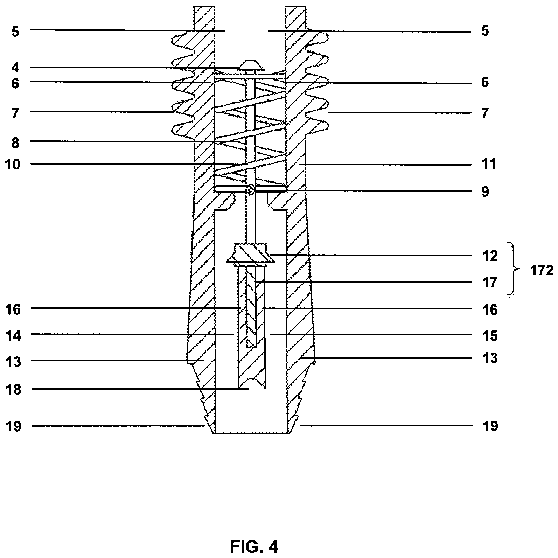

Figure 4 shows how, on making a pressure on the contact head (4) of the longitudinal part (10), this moves towards the interior of the valve, moving the cover (12) and allowing the exterior (5) and interior (14 and 15) volumes to come into communication with one another.

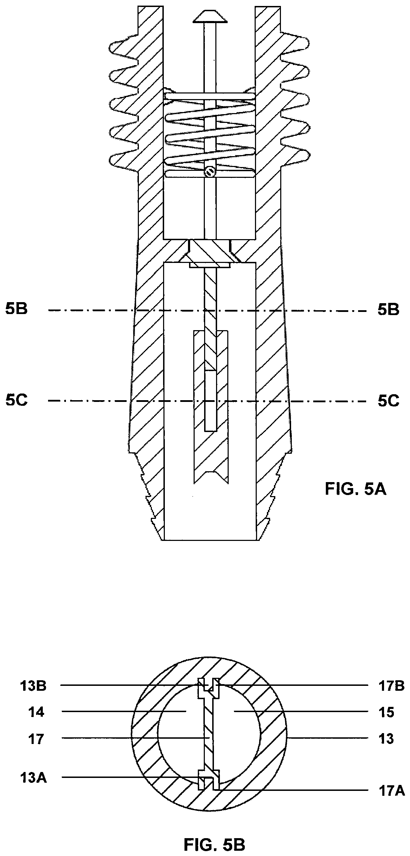

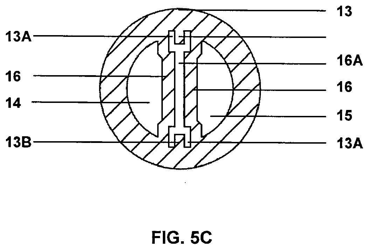

The effect of the opening of the valve cover can be explicitly observed in figures 5A-6B. In these figures a sectional drawing has been made to the same height in open and closed conditions.

In this way, figures 5A-5B (closed valve) show how the inner volumes (14 and 15) are confined to the spaces defined by the lower wall of the valve (13) and by the panel (17), forming two compartments without communication.

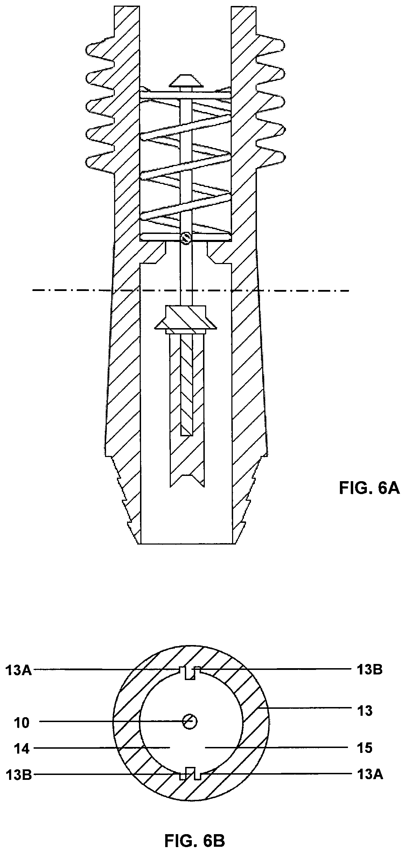

Figures 6A-6B (open valve) show how the inner volumes (14 and 15) are in communication, since the longitudinal part (10) does not cover all the space inside the lower wall (13).

Unlike the current devices, the fixing of the valve (1) to the elastic duct (3) has a privileged position which is marked by the plane which contains the inner partition wall of volumes of the tube (31) and by the plane of displacement of the panel in the valve (17), which must coincide. For this reason, and due to the need to have a simple access to longitudinally fasten the inner wall of the elastic duct to the device, the use of an adapter (2) has been chosen.

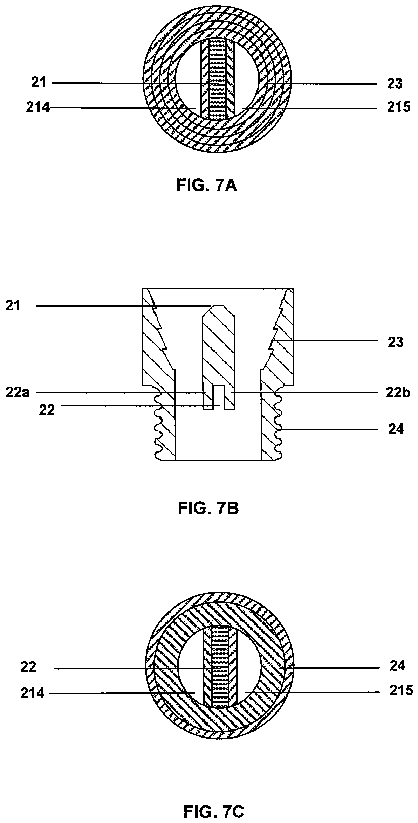

Figures 7A-7C show the adapter, comprising a first toothed surface (23) for its fixing to the valve and a second toothed surface (24) for its fixing to the elastic duct. Likewise, it has a longitudinal notch (22) where the partition wall of the elastic duct and a longitudinal protuberance (21) is fixed, parallel to the previous, which enables its correct fixing to the valve.

Figure 9 shows the diagram of the complete system in the situation wherein the pressurized air is introduced in the wheel (inflated) by the use of an external inflation and deflation system (40).

In this figure, the air introduced by the pressurized air inflation system crosses the elastic duct of said system (50), until reaching the inside of the adapter (40). The cover of the valve is open due to the effect of the pressure of the protuberance (41) on the longitudinal part (10). In this way, the air pumped through the system, as it is at a higher pressure than the air inside the wheel, circulates through each one of the two volumes (14 and 15), towards the inside thereof, traversing the valve (1), the adapter (2) and the elastic duct of the tyre (3). It should be highlighted that the current rims (60), have, a cylindrical orifice in their external part with pre-established dimensions to be able to introduce the elastic duct which communicates the tyre with the closure valve.

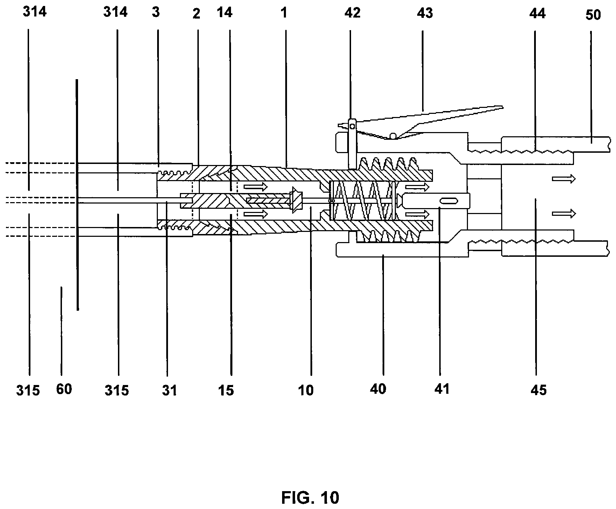

Figure 10 shows a similar diagram to that of figure 9, proceeding, in this case, to reduce the inner pressure of the tyre by extraction of the air to the outside (deflation). In this case, the air that is in the inflation or deflation system duct is initially at a lower pressure.

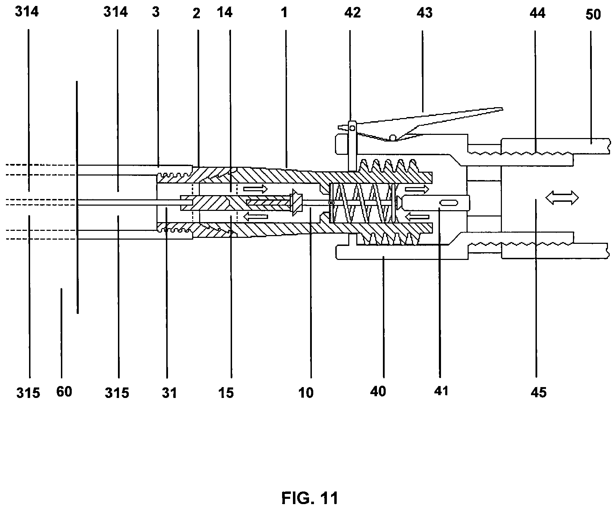

Figure 11 shows a diagram similar to that of figures 9 and 10, in the situation wherein the inflation or deflation system only fulfils the function of opening the valve cover allowing the free circulation of air between the two volumes (14 and 15) until the pressure is equalled between both.

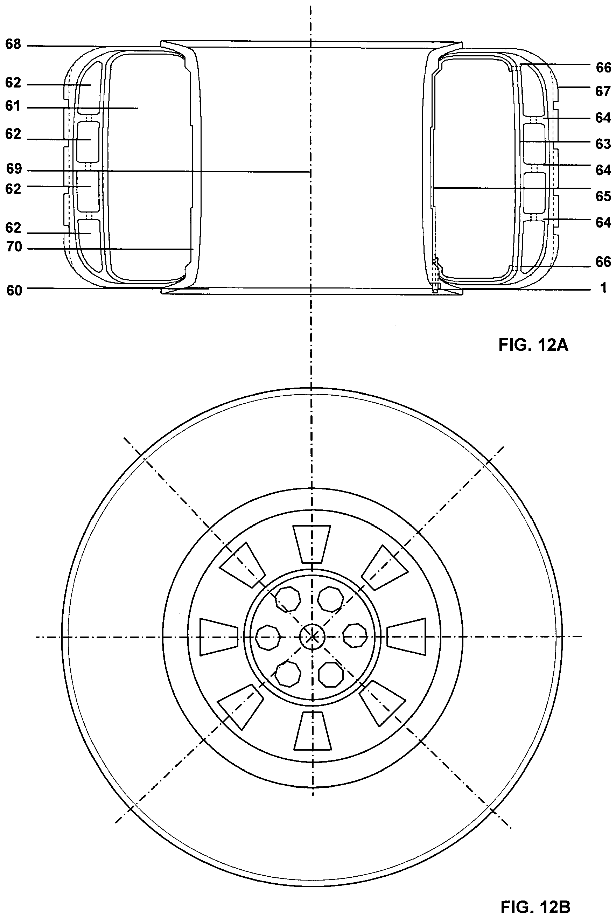

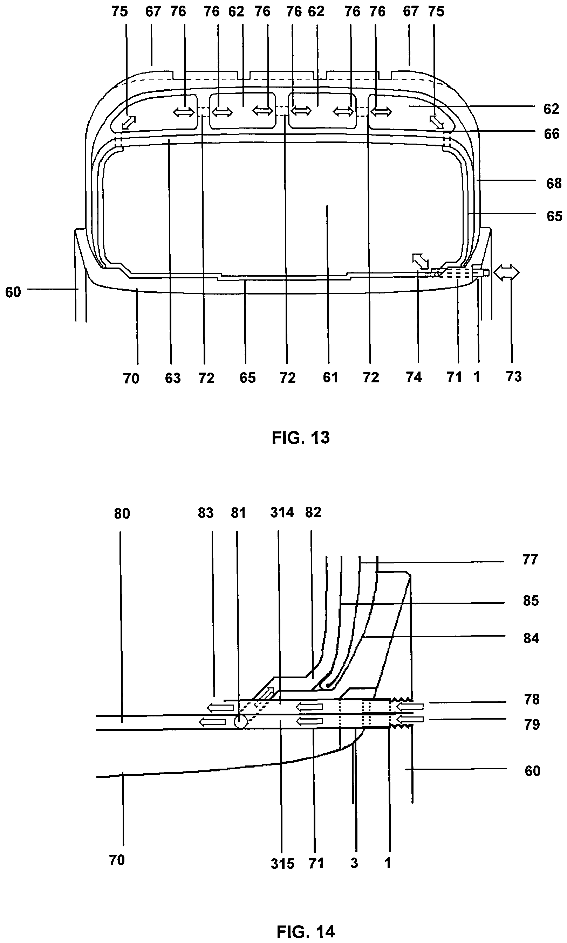

A more detailed application of this preferred embodiment of the invention is described below. In it, as shown in figures 12, 13 and 14, a tyre is used formed by a reinforced outer tread, similar to that of the tyres existing at present, which has an airtight separation between the main volume and secondary volumes, fixing this wall by a series of semi-rigid surfaces perpendicular to the outer tread and parallel to one another, and which have orifices which interconnect the secondary volumes.

Likewise, a two-duct inlet valve has been used. By the use of this valve, air is introduced at the same pressure through two independent ducts, one of which directly connects to the main volume and the other to two tubes which reach the ends of the secondary volumes. In this way, it manages to fill both the main volume of the tread and the secondary volumes at the same initial pressure. The secondary volumes are intercommunicated, being completely isolated from the main volume so that, in the event an air leak occurs in the main volume or in any of the secondary volumes, this pressure decrease would solely affect one of the two systems.

Once a pressure difference has occurred between the main volumes and the secondary volumes, the air contained in the two spaces shall not be subjected to the same pressure until this difference is resolved by the new introduction of air through the valve.

In this way, in the event an incision occurs in the tread due to wear of the contact surface thereof, or due to the presence of a sharp object on the road, this breakage of the airtight wall will generally occur in the outer surface that surrounds the secondary volumes. In this case, the inner pressure of the main volume shall not be affected. This circumstance together with the presence of semi-rigid contact elements between the outer surface and the partition wall, mean that, in this case, the effective diameter of the tyre is only reduced by several centimetres, avoiding a loss of control of the vehicle in the event of breakage of the outer surface of the tread.

Additionally, it is necessary to consider that the inclusion of the semi-rigid elements, such as a horizontal partition wall between volumes (the main volume and the secondary volumes), contributes to the tyre undergoing a lesser degree of deformation in relation to its vertical symmetry when driving on curves, providing greater stability and adherence to the vehicle than a traditional tyre.

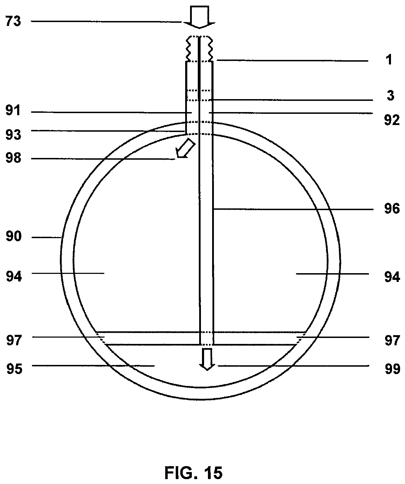

Finally, figure 15 shows an application of the valve object of the invention to an inner tube of pressurized air or gas of a tyre with inner tube similar to those used in bicycles, mopeds and motorcycles. In this case, and as with the tyre configuration described above, the inner tube has two airtight volumes or compartments (main or upper and secondary or lower) which connect with the valve through a tube divided longitudinally in two independent ducts. This also allows the simultaneous inflation and deflation at the same pressure and the maintenance of an effective diameter in the case of breakage of the tread of the inner tube in contact with the lower volume that avoids loss of control of the vehicle.

## Claims

1. Valve for a compartmentalized tyre, where said valve has a body (1) which has a first end (1A) configured for coupling to inflation/deflation means (50) of the compartmentalized tyre; a second end (1 B), opposite the first end, configured for coupling to an inflation/deflation duct (3) of the compartmentalized tyre; a flow channel (1 C) between the first end (1A) and the second end (1B), comprising:
a) at least two cavities located in the interior of the valve body (1):
a1) a first cavity (14) comprising first connection means (141) to a first compartment (61, 94) of the tyre;
a2) a second cavity (15) comprising second connection means (151) to a second compartment (62, 95) of the tyre;
b) a communication channel (1 D) between the first cavity (14) and the second cavity (15);
**characterised in that** it further comprises:
c) an opening/closing element (172) formed by:
c1) an opening/closing cover (12) of the flow channel (1C);
c2) a connection/disconnection separator (17) of the communication channel (1 D).

2. Valve according to claim 1, **wherein** the opening/closing element (172) has a movement between:
an open position where the first cavity (14) and the second cavity (15) are communicated at the same pressure simultaneously;
a closed position where the first cavity (14) and the second cavity (15) are isolated from one another.

3. Valve according to claim 1, **wherein** the opening/closing cover (12) and the connection/disconnection separator (17) are simultaneously displaced between the open position and the closed position in a longitudinal axial movement.

4. Valve according to claim 1, **comprising** guiding means (16) which define an opening/closing stroke of the connection/disconnection separator (17) between the open position and the closed position.

5. Valve according to claim 4, **wherein** the connection/disconnection separator (17) comprises a first notch (17A) and a first protuberance (17B) situated in a contact area between the connection/disconnection separator (17) and a wall of the first cavity (14) and of the second cavity (15).

6. Valve according to claim 1, **wherein** an inner wall of the valve (13) comprises a second notch (13A) and a second protuberance (13B) situated in a closure area between the inner wall of the valve (13) and the guiding means (16).

7. Valve according to claim 1, **comprising** an adapter (2) comprising:
a) a first mouth (2A) for coupling to the second end (1 B) forming a first mouth (2A)-second end (1 B) joint;
b) a second mouth (2B), opposite the first mouth, for coupling to an inflation/deflation duct (3) of the tyre;
c) a first duct (214) for coupling to the first cavity (14) ;
d) a second duct (215) for coupling to the second cavity (15);
e) positioning means (21) which determine a coupling position between the body (1) and the adapter (2) where the first duct (214)-first cavity (14) coupling and the second duct (215)-second cavity (15) coupling allow a flow of gas without losses in the first mouth (2A)-second end (1 B) joint.

8. Valve according to claim 7, **wherein** the adapter (2) comprises a plurality of tongues (22a, 22b) situated in sides of internal walls of the adapter (2), said tongues (22a, 22b) defining connection means with an inner wall (31) of the inflation/deflation duct (3) in accordance with a predetermined connection position.

9. Valve according to claim 1, **comprising** an elastic mechanism (8, 9) configured to allow an opening of the valve applying pressure on a contact head (4).

10. A compartmentalized tyre comprising a valve as defined in the preceding claims.

11. A compartmentalized tyre according to claim 10, **comprising** a plurality of gas inlet and outlet ducts (80, 83, 93, 96):
which connect the first compartment (61, 94) and the second compartment (62, 95) with the outside through the valve;
disposed parallel to one another in an area exterior to a rim (60).

12. A compartmentalized tyre according to claim 11, **comprising** an inflation/deflation duct (3) comprising the gas inlet and outlet ducts (80, 83, 93, 96) in an area exterior to the rim (60).

13. A compartmentalized tyre according to claim 10, **wherein** it is selected from a tyre without an inner tube and a tyre with an inner tube.

## Patentansprüche

1. Ventil für einen unterteilten Reifen, wobei das Ventil einen Körper (1) aufweist, der ein erstes Ende (1A), das zur Kopplung mit einem Aufpump-/Ablassmittel (50) des unterteilten Reifens konfiguriert ist; ein zweites Ende (1B) gegenüber dem ersten Ende, das zur Kopplung mit einem Aufpump-/Ablasskanal (3) des unterteilten Reifens konfiguriert ist, und einen Strömungskanal (1C) zwischen dem ersten Ende (1A) und dem zweiten Ende (1B) aufweist, das aufweist:
a) mindestens zwei Hohlräume, die sich im Inneren des Ventilkörpers (1) befinden:
a1) einen ersten Hohlraum (14), der ein erstes Verbindungsmittel (141) zu einer ersten Abteilung (61, 94) des Reifens aufweist;
a2) einen zweiten Hohlraum (15), der ein zweites Verbindungsmittel (151) zu einer zweiten Abteilung (62, 95) des Reifens aufweist;
b) einen Verbindungskanal (1D) zwischen dem ersten Hohlraum (14) und dem zweiten Hohlraum (15);
**dadurch gekennzeichnet, dass** es ferner aufweist:
c) ein Öffnungs-/Schließelement (172), das gebildet wird durch:
c1) eine Öffnungs-/Schließabdeckung (12) des Strömungskanals (1C);
c2) ein Verbindungs-/Trennungselement (17) des Verbindungskanals (1D).

2. Ventil nach Anspruch 1, wobei das Öffnungs-/Schließelement (172) eine Bewegung aufweist zwischen:
einer offenen Position, wo der erste Hohlraum (14) und der zweite Hohlraum (15) gleichzeitig auf demselben Druck verbunden sind;
einer geschlossenen Position, wo der erste Hohlraum (14) und der zweite Hohlraum (15) voneinander getrennt sind.

3. Ventil nach Anspruch 1, wobei die Öffnungs-/Schließabdeckung (12) und das Verbindungs-/Trennungselement (17) gleichzeitig in einer longitudinalen axialen Bewegung zwischen der offenen Position und der geschlossenen Position verschoben werden.

4. Ventil nach Anspruch 1, das Führungsmittel (16) aufweist, die einen Öffnungs-/Schließhub des Verbindungs-/Trennungselements (17) zwischen der offenen Position und der geschlossenen Position definieren.

5. Ventil nach Anspruch 4, wobei das Verbindungs-/Trennungselement (17) eine erste Kerbe (17A) und einen ersten Vorsprung (17B) aufweist, die sich in einen Kontaktbereich zwischen dem Verbindungs-/Trennungselement (17) und einer Wand des ersten Hohlraum (14) und des zweiten Hohlraums (15) befinden.

6. Ventil nach Anspruch 1, wobei eine Innenwand des Ventils (13) eine zweite Kerbe (13A) und einen zweiten Vorsprung (13B) aufweist, die sich in einem Verschlussbereich zwischen der Innenwand des Ventils (13) und den Führungsmitteln (16) befinden.

7. Ventil nach Anspruch 1, das einen Adapter (2) aufweist, der aufweist:
a) eine erste Mündung (2A) zur Kopplung mit dem zweiten Ende (1B), die eine Verbindung des ersten Mündung (2A) zum zweiten Ende (1B) bildet;
b) eine zweite Mündung (2B) gegenüber der ersten Mündung zur Kopplung mit einem Aufpump-/Ablasskanal (3) des Reifens;
c) einen ersten Kanal (214) zur Kopplung mit dem ersten Hohlraum (14) ;
d) einen zweiten Kanal (215) zur Kopplung mit dem zweiten Hohlraum (15);
e) Positionierungsmittel (21), die eine Kopplungsposition zwischen dem Körper (1) und dem Adapter (2) festlegen, wobei die Kopplung des ersten Kanals (214) mit dem ersten Hohlraum (14) und die Kopplung des zweiten Kanals (215) mit dem zweiten Hohlraum (15) einen Gasstrom ohne Verluste in der Verbindung der ersten Mündung (2A) mit dem zweiten Ende (1B) ermöglichen.

8. Ventil nach Anspruch 7, wobei der Adapter (2) mehrere Zungen (22a, 22b) aufweist, die sich in Seiten der Innenwände des Adapters (2) befinden, wobei die Zungen (22a, 22b) Verbindungsmittel mit einer Innenwand (31) des Aufpump-/Ablasskanals (3) entsprechend einer vorgegebenen Verbindungsposition definieren.

9. Ventil nach Anspruch 1, das einen elastischen Mechanismus (8, 9) aufweist, der konfiguriert ist, eine Öffnung des Ventils zu ermöglichen, und der einen Druck auf einen Kontaktkopf (4) ausübt.

10. Unterteilter Reifen, der ein Ventil nach einem der vorhergehenden Ansprüche aufweist.

11. Unterteilter Reifen nach Anspruch 10, der mehrere Gaseinlass- und Auslasskanälen (80, 83, 93, 96) aufweist,
die die erste Abteilung (61, 94) und die zweite Abteilung (62, 95) durch das Ventil mit dem Äußeren verbinden;
die parallel zueinander in einem Bereich außerhalb einer Felge (60) verbunden sind.

12. Unterteilter Reifen nach Anspruch 11, der einen Aufpump-/Ablasskanal (3) aufweist, der die Gaseinlass- und Auslasskanäle (80, 83, 93, 96) in einem Bereich außerhalb der Felge (60) aufweist.

13. Unterteilter Reifen nach Anspruch 10, wobei er aus einem Reifen ohne einen Schlauch und einem Reifen mit einem Schlauch ausgewählt ist.

## Revendications

1. Valve pour un pneu compartimenté, ladite valve présentant un corps (1) avec une première extrémité (1A) prévue pour être raccordée à un moyen de gonflage/dégonflage (50) du pneu compartimenté ; une deuxième extrémité (1B) opposée à la première extrémité, prévue pour être raccordée à un conduit de gonflage/dégonflage (3) du pneu-compartimenté ; un canal de circulation (1C) entre la première extrémité (1A) et la deuxième extrémité (1B), comprenant :
a) au moins deux cavités présentées à l'intérieur du corps (1) de valve :
a1) une première cavité (14) comprenant un premier moyen de connexion (141) à un premier compartiment (61, 94) du pneu;
a2) une deuxième cavité (15) comprenant un deuxième moyen de connexion (151) à un deuxième compartiment (62, 95) du pneu;
b) un canal de communication (1D) entre la première cavité (14) et la deuxième cavité (15) ;
**caractérisée en ce qu'**elle comprend en outre :
c) un élément d'ouverture/de fermeture (172) formé par :
c1) un obturateur d'ouverture/de fermeture (12) du canal de circulation (1C) ;
c2) un séparateur de connexion/de déconnexion (17) du canal de communication (1D).

2. Valve selon la revendication 1, où l'élément d'ouverture/de fermeture (172) est mobile entre :
une position d'ouverture où la première cavité (14) et la deuxième cavité (15) communiquent simultanément avec la même pression ;
une position de fermeture où la première cavité (14) et la deuxième cavité (15) sont isolées l'une de l'autre.

3. Valve selon la revendication 1, où l'obturateur d'ouverture/de fermeture (12) et le séparateur de connexion/de déconnexion (17) sont déplacés simultanément entre la position d'ouverture et la position de fermeture par mouvement axial longitudinal.

4. Valve selon la revendication 1, comprenant des moyens de guidage (16) définissant une course d'ouverture/de fermeture du séparateur de connexion/de déconnexion (17) entre la position d'ouverture et la position de fermeture.

5. Valve selon la revendication 4, où le séparateur de connexion/de déconnexion (17) présente un premier cran (17A) et une première saillie (17B) situés dans une zone de contact entre le séparateur de connexion/de déconnexion (17) et une paroi de la première cavité (14) et de la deuxième cavité (15).

6. Valve selon la revendication 1, où une paroi intérieure de la valve (13) présente un deuxième cran (13A) et une deuxième saillie (13B) situés dans une zone de fermeture entre la paroi intérieure de la valve (13) et les moyens de guidage (16).

7. Valve selon la revendication 1, comprenant un adaptateur (2) avec :
a) une première embouchure (2A) à raccorder à la deuxième extrémité (1B) en formant un joint première embouchure (2A) - deuxième extrémité (1B) ;
b) une deuxième embouchure (2B) opposée à la première embouchure à raccorder à un conduit de gonflage/dégonflage (3) du pneumatique ;
c) un premier conduit (214) à raccorder à la première cavité (14) ;
d) un deuxième conduit (215) à raccorder à la deuxième cavité (15) ;
e) des moyens de positionnement (21) déterminant une position de raccordement entre le corps (1) et l'adaptateur (2), la connexion premier conduit (214) - première cavité (14) et la connexion deuxième conduit (215) - deuxième cavité (15) permettant un écoulement de gaz sans pertes dans le joint première embouchure (2A) - deuxième extrémité (1B).

8. Valve selon la revendication 7, où l'adaptateur (2) présente une pluralité de languettes (22a, 22b) sur les côtés dé parois intérieures de l'adaptateur (2), lesdites languettes (22a, 22b) définissant des moyens de connexion avec une paroi intérieure (31) du conduit de gonflage/dégonflage (3) en fonction d'une position de connexion définie.

9. Valve selon la revendication 1, comprenant un mécanisme élastique (8, 9) prévu pour permettre l'ouverture de la valve par application d'une pression sur une tête de contact (4).

10. Pneu compartimenté, comprenant une valve selon l'une des revendications précédentes.

11. Pneu compartimenté selon la revendication 10, comprenant une pluralité de conduits d'admission et d'évacuation de gaz (80, 83, 93, 96) :
reliant le premier compartiment (61, 94) et le deuxième compartiment (62, 95) à l'extérieur via la valve ;
disposés parallèlement entre eux dans une zone extérieure à un bord (60).

12. Pneu compartimenté selon la revendication 11, comprenant un conduit de gonflage/dégonflage (3) comprenant les conduits d'admission et d'évacuation de gaz (80, 83, 93, 96) dans une zone extérieure au bord (60).

13. Pneu compartimenté selon la revendication 10, où celui-ci est sélectionné entre un pneumatique sans un tuyau et un pneumatique avec un tuyau.
